# EUROPÄISCHE PATENTANMELDUNG

(11) **EP 4 733 158 A1**
(43) Veröffentlichungstag der Anmeldung: **29.04.2026**
(21) Anmeldenummer: 25210316.3
(22) Anmeldetag: 22.10.2025
(51) Int. Cl.: B60T 13/66, B60T 17/22

(54) **DRUCKREGELVORRICHTUNG FÜR EINE FEDERSPEICHERBREMSE**

(30) Priorität: 28.10.2024 DE 202024106167 U
(71) Anmelder: Hanning & Kahl GmbH & Co. KG, 33813 Oerlinghausen (DE)
(72) Erfinder: ALTENBEREND, Martin, 33813 Oerlinghausen (DE)
(74) Vertreter: Ter Meer Steinmeister & Partner

(57) **Zusammenfassung**

Druckregelvorrichtung für eine Federspeicherbremse (12), mit einer Regelventilanordnung (26, 32), die den Fluss von Hydraulikfluid von einer Druckquelle (22) zur Federspeicherbremse (12) und den Fluss von Hydraulikfluid von der Federspeicherbremse zu einem Tank (18) regelt, und mit einer Sicherheitseinrichtung (36, 38), die den Druck in der Federspeicherbremse im Falle einer Störung auf einen voreingestellten Wert begrenzt, dadurch gekennzeichnet, dass die Regelventilanordnung ein stromlos geschlossenes Zufuhrventil (26) zwischen der Druckquelle (22) und der Federspeicherbremse (12) und ein stromlos geöffnetes Ablassventil (32) zwischen der Federspeicherbremse und dem Tank (18) aufweist und dass die Sicherheitseinrichtung ein stromlos geöffnetes Schaltventil (36) mit nicht mehr als zweihydraulischen Anschlüssen aufweist, das die Federspeicherbremse (12) über ein in Reihe geschaltetes Druckbegrenzungsventil (38) parallel zu dem Ablassventil (32) mit dem Tank (18) verbindet.

## Beschreibung

Die Erfindung betrifft eine Druckregelvorrichtung für eine Federspeicherbremse, mit einer Regelventilanordnung, die den Fluss von Hydraulikfluid von einer Druckquelle zur Federspeicherbremse und den Fluss von Hydraulikfluid von der Federspeicherbremse zu einem Tank regelt, und mit einer Sicherheitseinrichtung, die den Druck in der Federspeicherbremse im Falle einer Störung auf einen voreingestellten Wert begrenzt.

Schienenfahrzeuge wie beispielsweise Straßenbahnen sind häufig mit elektrohydraulischen Federspeicherbremsen ausgerüstet, die in der Lage sind, auch bei einem Ausfall der Versorgungsspannung eine ausreichende Bremskraft zu erzeugen. Die Bremse ist durch Federkraft in ihre Bremsstellung vorgespannt, und um die Bremse zu lösen oder den Bremsdruck zu dosieren, muss mit Hilfe der Regelventilanordnung ein geeigneter Druck in der Federspeicherbremse aufgebaut werden. Wenn bei einem Stromausfall oder einer sonstigen Funktionsstörung die Regelventilanordnung nicht mehr korrekt arbeitet, soll der Druck in der Federspeicherbremse durch die Sicherheitseinrichtung so begrenzt werden, dass das Fahrzeug in den Stand gebremst wird.

Aus der Praxis ist eine Druckregelvorrichtung der eingangs genannten Art bekannt, bei der die Regelventilanordnung durch ein elektronisch geregeltes Proportionalventil gebildet wird. Die Sicherheitseinrichtung wird durch ein 3/2-Wegeventil gebildet, das im bestromten Zustand die Regelventilanordnung mit der Federspeicherbremse verbindet und beim Übergang in den unbestromten Zustand diese Verbindung trennt und die Federspeicherbremse stattdessen über ein Druckbegrenzungsventil mit dem Tank verbindet. Das Druckbegrenzungsventil ist so eingestellt, dass es schließt, sobald der Druck in der Federspeicherbremse auf den gewünschten Mindestdruck abgenommen hat.

Bei der bekannten Druckregelvorrichtung weist das Proportionalventil, typischerweise ein Kolbenschieberventil, unvermeidlich eine gewisse Leckage auf, die es erforderlich macht, in der Leitung zum Tank noch ein Leckschutzventil vorzusehen, das im bestromten Zustand den Leckstrom auffängt und nur im unbestromten Zustand geöffnet ist. Dadurch wird im Fahrzeug zusätzlicher Bauraum benötigt. Der Bauraumbedarf wird auch dadurch weiter erhöht, dass die in der Druckregelvorrichtung eingesetzten Ventile relativ große Abmessungen haben müssen. Zum einen müssen die Durchlassquerschnitte der Ventile und damit auch die Ventilgehäuse so groß sein, dass das Hydrauliksystem auch bei niedrigen Temperaturen und entsprechend hoher Viskosität des Hydraulikfluids funktionsfähig ist. Außerdem müssen die Spulen der Ventile so dimensioniert sein, dass die Ventile bei der vom Fahrzeug bereitgestellten Betriebsspannung einwandfrei schalten. Daraus ergeben sich auch gewisse Mindestabmessungen für die Spulen.

Aufgabe der Erfindung ist es, eine Druckregelvorrichtung zu schaffen, die ohne Einschränkung der Betriebssicherheit flexibel in unterschiedlichen Fahrzeugsystemen eingesetzt werden kann.

Diese Aufgabe wird erfindungsgemäß dadurch gelöst, dass die Regelventilanordnung ein stromlos geschlossenes Zufuhrventil zwischen der Druckquelle und der Federspeicherbremse und ein stromlos geöffnetes Ablassventil zwischen der Federspeicherbremse und dem Tank aufweist und dass die Sicherheitseinrichtung ein stromlos geöffnetes Schaltventil mit nicht mehr als zwei hydraulischen Anschlüssen aufweist, das die Federspeicherbremse über ein in Reihe geschaltetes Druckbegrenzungsventil parallel zu dem Ablassventil mit dem Tank verbindet.

Die Aufteilung der Funktion der Regelventilanordnung auf zwei getrennte Ventile erlaubt es, in der Sicherheitseinrichtung anstelle eines 3/2-Wegeventils ein robustes und praktisch leckagefreies Schaltventil einzusetzen, das selbst nur vergleichsweise wenig Bauraum erfordert und überdies den Einsatz eines zusätzlichen Leckschutzventils unnötig macht. Durch die Verringerung des benötigten Bauraums vergrößert sich die konstruktive Freiheit beim Einbau der Druckregelvorrichtung in unterschiedlichen Fahrzeugumgebungen.

Vorteilhafte Ausgestaltungen und Weiterbildungen der Erfindung sind in den Unteransprüchen angegeben.

Zwar lässt sich ein Schaltvorgang des Schaltventils im Prinzip einfach dadurch herbeiführen, dass die Ventilspule von der Versorgungsspannung getrennt oder wieder an diese angeschlossen wird, doch ist es zweckmäßig, das Schaltventil über ein elektronisches Vorschaltgerät anzusteuern. Das Schaltventil, beispielsweise ein Sitzventil, benötigt im geschlossenen Zustand (dem normalen Betriebszustand) nur einen geringen Haltestrom. Das Vorschaltgerät ermöglicht es, die Bestromung so zu steuern oder zu regeln, dass nur beim Schalten des Ventils ein hoher Anzugstrom bereitgestellt wird, während der Stromfluss nach dem Umschalten in den geschlossenen Zustand auf den vergleichsweise kleinen Haltestrom reduziert wird. Damit wird nicht nur der Stromverbrauch, sondern auch die Wärmeentwicklung der Druckregelvorrichtung reduziert.

Ein weiterer Vorteil besteht darin, dass das Vorschaltgerät eine flexible Anpassung an unterschiedliche hohe Versorgungsspannungen ermöglicht, die von dem Fahrzeug bereitgestellt werden. Auch wenn sich die verfügbaren Betriebsspannungen von Fahrzeugtyp zu Fahrzeugtyp unterscheiden, können dann in den verschiedenen Fahrzeugtypen Ventile mit identisch dimensionierten Spulen eingesetzt werden, so dass sich durch die Vereinheitlichung der Komponenten Rationalisierungseffekte ergeben.

Auch die Vorschaltgeräte oder Treiber für das Zufuhrventil und das Ablassventil können einstellbare Spannungswandler enthalten, mit denen die vom Fahrzeug bereitgestellte Spannung in die von den Spulen benötigten Spannungen umwandeln lassen.

Als Zufuhrventil und Ablassventil können dann robuste 2-Wege-Sitzventile eingesetzt werden, deren Spulen für den Betrieb mit einer festen Spannung von beispielswiese 12V ausgelegt sind. Diese Ventile zeichnen sich durch eine geringe Größe aus und sind weitgehend unempfindlich gegenüber Partikelkontamination des Hydraulikfluids. Insgesamt wird so der erforderliche Bauraum weiter reduziert. Zugleich werden die Anforderungen an die Fahrzeugelektrik gelockert, so dass baugleiche Druckregelvorrichtungen in einer größeren Bandbreite von Fahrzeugtypen eingesetzt werden können.

In einer Ausführungsform sind Vorschaltgeräte sowohl für das Schaltventil als auch für das Zufuhrventil und das Ablassventil vorgesehen. Das Vorschaltgerät des Schaltventils und das Vorschaltgerät des Zufuhrventils werden durch eine gemeinsame Schnittstelle mit Energie versorgt, während das Vorschaltgerät des Ablassventils durch eine separate Schnittstelle mit Energie versorgt wird. Bei einem Ausfall der gemeinsamen Schnittstelle wird dann der Druck in der Federspeicherbremse nicht auf null reduziert, was zu einer Vollbremsung des Fahrzeugs führen würde, sondern der Druck sinkt nur auf einen durch das Druckbegrenzungsventil bestimmten Wert, bei dem das Fahrzeug sicher in den Stand gebremst wird.

Im Folgenden wird ein Ausführungsbeispiel anhand der Zeichnungen näher erläutert.

Es zeigen:
- Fig. 1: einen Hydraulikplan einer erfindungsgemäßen Druckregelvorrichtung; und
- Fig. 2: ein Strom/Zeit-Diagramm eines Vorschaltgerätes für ein Schaltventil in der Druckregelvorrichtung.

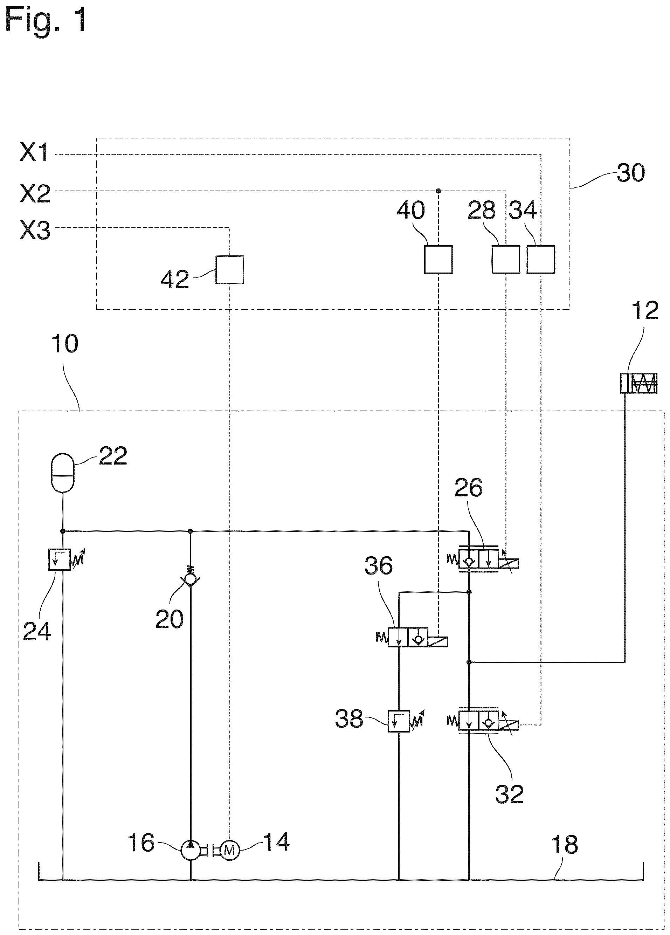

Fig. 1 zeigt die wesentlichen Komponenten eines Hydraulikgerätes 10, das den hydraulischen Druck einer Federspeicherbremse 12 eines Schienenfahrzeugs steuert. Eine durch einen bürstenlosen Motor 14 angetriebene Pumpe 16 saugt Hydraulikflüssigkeit aus einem Tank 18 an und fördert sie über ein Rückschlagventil 20 zu einem Druckspeicher 22, der eine Druckquelle der Druckregelvorrichtung bildet. Durch ein zwischen den Druckspeicher 22 und den Tank 18 geschaltetes Druckbegrenzungsventil 24 wird der Druck im Druckspeicher auf einen mechanisch einstellbaren Wert begrenzt.

Der Druckspeicher 22 ist mit dem Eingang eines stromlos geschlossenen Zufuhrventils 26 verbunden, dessen Auslass mit der Federspeicherbremse 12 verbunden ist. Das Zufuhrventil 26 ist als Zwei-Wege-Sitzventil ausgebildet und kann durch ein als Leistungstreiber konfiguriertes Vorschaltgerät 28 in einem elektronischen Steuergerät 30 so angesteuert werden, dass die Durchflussmenge zur Federspeicherbremse 12 stetig variiert.

Der Auslass des Zufuhrventils 26 und die Federspeicherbremse 12 sind weiterhin mit dem Einlass eines stromlos geöffneten Ablassventils 32 verbunden, dessen Auslass mit dem Tank 18 verbunden ist. Das Ablassventil 32 kann durch ein Vorschaltgerät 34 so angesteuert werden, dass auch die Abflussrate der Hydraulikflüssigkeit aus der Federspeicherbremse stetig variiert.

Im normalen Fahrbetrieb ist das Zufuhrventil 26 geöffnet und das Ablassventil 32 geschlossen, so dass an der Federspeicherbremse 12 der maximale, vom Druckspeicher 22 gelieferte Druck ansteht und somit die Federspeicherbremse vollständig gelöst ist. Bei einem Bremsvorgang wird der Druck in der Federspeicherbremse 12 durch die Ansteuerung des Zufuhrventils 26 und des Ablassventils 32 so geregelt, dass die Federspeicherbremse die jeweils geforderte Bremskraft bereitstellt.

Der Auslass des Zufuhrventils 26 und die Federspeicherbremse 12 sind weiterhin mit dem Einlass eines stromlos geöffneten Schaltventils 36 verbunden, das außer dem Einlass und einem Auslass, der über ein nachgeschaltetes (oder wahlweise auch vorgeschaltetes) Druckbegrenzungsventil 38 mit dem Tank 18 verbunden ist, keine weiteren hydraulischen Anschlüsse aufweist (2-2-Wegeventil). Ein Vorschaltgerät 40 hält das Schaltventil 36 im Fahrbetrieb und auch während eines Bremsvorgangs geschlossen. Die Vorschaltgeräte 40 und 28 für das Schaltventil 36 und das Zufuhrventil 26 werden über eine gemeinsame Schnittstelle X2 mit Spannung versorgt. Bei einem Ausfall dieser Spannung öffnet das Schaltventil 36, während das Zufuhrventil 26 schließt, so dass die Hydraulikflüssigkeit aus der Federspeicherbremse 12 über das Druckbegrenzungsventil 38 in den Tank abfließt, bis der Schließdruck des Druckbegrenzungsventils erreicht ist. Dieser Schließdruck, der auch den verbleibenden Druck in der Federspeicherbremse 12 bestimmt, ist manuell so einstellbar, dass das Fahrzeug mit einer sicheren Bremsverzögerung gebremst wird. Solange die Schnittstelle X2 intakt bleibt, kann so eine verschleißträchtige und u.U. gefährliche Vollbremsung verhindert werden.

Das Vorschaltgerät 34 für das Ablassventil 32 wird über eine separate Schnittstelle X1 mit Betriebsspannung versorgt. Bei einem Ausfall dieser Spannung öffnet das Ablassventil 32, und der Druck in der Federspeicherbremse 12 sinkt mit einer Geschwindigkeit, die durch den Durchlassquerschnitt des Ablassventils 32 bestimmt wird. Dadurch wird auch in diesem Fall das Fahrzeug in den Stand gebremst.

Eine weitere Schnittstelle X3 stellt über ein weiteres Vorschaltgerät 42 die Betriebsspannung für den Motor 14 bereit. Die Vorschaltgeräte 28, 34, 40 und 42 enthalten einstellbare Spannungswandler, mit denen die über die Schnittstellen X1-X3 bereitgestellten Versorgungsspannungen in die Spannungen umgewandelt werden können, die von den Verbrauchern, also dem Motor 14 und den Ventilspulen, benötigt werden. So kann die Druckregelvorrichtung einfach an unterschiedliche Fahrzeugtypen angepasst werden, die unterschiedliche Versorgungsspannungen bereitstellen.

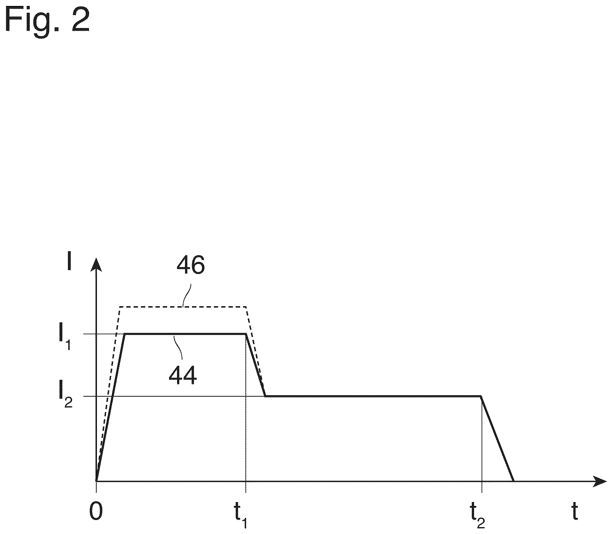

Das Vorschaltgerät 40 hat darüber hinaus die Funktion, den Stromfluss durch die Spule des Schaltventils 36 zeitabhängig zu regeln. Fig. 2 zeigt mögliche Strom/Zeit-Kurven für einen Schaltvorgang des Schaltventils 36. Die Kurven 44, 46 in Fig. 2 geben jeweils den durch die Ventilspulen fließenden Strom I als Funktion der Zeit t an. Es sei angenommen, dass zum Zeitpunkt t = 0 der Befehl eintrifft, die Bremse zu lösen, so dass das Schaltventil 36 aus dem stromlosen, geöffneten Zustand in den geschlossenen Zustand wechseln muss. Durch das Vorschaltgerät 40 wird dann der Strom gemäß der Kurve 44 so hochgeregelt, dass er den Wert I₁ erreicht, der dem Nennstrom der Spule entspricht. Dieser Nennstrom gibt die Stromstärke an, die erforderlich ist, um sicherzustellen, dass das Ventil wirklich schaltet. Der Strom bleibt dann während eines gewissen Zeitintervalls, bis zur Zeit t₁, auf diesem Niveau. Spätestens zur Zeit t₁ hat das Ventil seine Schließstellung erreicht. Da dann der Luftspalt im magnetischen Kreis des Ventils praktisch auf null abgenommen hat, hat die Spule ihre maximale Induktivität, und es genügt ein niedrigerer Strom, der sogenannte Haltestrom, das Ventil in der geschlossenen Stellung zu halten. Das Vorschaltgerät 40 regelt deshalb den Strom auf einen niedrigeren Wert I₂ herunter, der dem Haltestrom entspricht. Während der Zeit, in der das Ventil geschlossen bleibt, sind deshalb der Stromverbrauch und die Wärmeentwicklung reduziert. Wenn zu einem Zeitpunkt t₂ der Befehl gegeben wird, das Schaltventil 36 wieder in die Öffnungsstellung zu schalten, so regelt das Vorschaltgerät den Strom herunter, und sobald die Stromstärke einen gewissen Schwellenwert unterschreitet, kehrt das Ventil durch Federkraft in die geöffnete Stellung zurück.

Die Kurve 46 in Fig. 2 gibt den Fall an, dass in der Anzugsphase des Ventils eine Übererregung stattfindet, d.h., in dem Intervall zwischen t=0 und t= t₁ wird auf einen Anzugstrom geregelt, der größer ist als der Nennstrom. Auch in diesem Fall wird nach einem Zeitintervall, das mindestens gleich der Anzugszeit des Ventils plus eine gewisse Reserve ist, wieder auf den Haltestrom I₂ heruntergeregelt.

## Patentansprüche

1. Druckregelvorrichtung für eine Federspeicherbremse (12), mit einer Regelventilanordnung (26, 32), die den Fluss von Hydraulikfluid von einer Druckquelle (22) zur Federspeicherbremse (12) und den Fluss von Hydraulikfluid von der Federspeicherbremse zu einem Tank (18) regelt, und mit einer Sicherheitseinrichtung (36, 38), die den Druck in der Federspeicherbremse im Falle einer Störung auf einen voreingestellten Wert begrenzt, **dadurch gekennzeichnet, dass** die Regelventilanordnung ein stromlos geschlossenes Zufuhrventil (26) zwischen der Druckquelle (22) und der Federspeicherbremse (12) und ein stromlos geöffnetes Ablassventil (32) zwischen der Federspeicherbremse und dem Tank (18) aufweist und dass die Sicherheitseinrichtung ein stromlos geöffnetes Schaltventil (36) mit nicht mehr als zwei hydraulischen Anschlüssen aufweist, das die Federspeicherbremse (12) über ein in Reihe geschaltetes Druckbegrenzungsventil (38) parallel zu dem Ablassventil (32) mit dem Tank (18) verbindet.

2. Druckregelvorrichtung nach Anspruch 1, bei der mindestens ein elektronisches Vorschaltgerät (28, 34, 40) zur Steuerung des Zufuhrventils (26) und/oder des Ablassventils (32) und/oder des Schaltventils (36) vorgesehen ist.

3. Druckregelvorrichtung nach Anspruch 2, bei der ein Steuergerät (30) zur Erzeugung von Sollwerten für die Stromregelung mindestens eines der Vorschaltgeräte (28, 34, 40) vorgesehen ist.

4. Druckregelvorrichtung nach Anspruch 3, bei der ein Vorschaltgerät (28) zur Steuerung des Zufuhrventils (26) und ein Vorschaltgerät (34) zur Steuerung des Ablassventils (32) vorgesehen ist und das Steuergerät (30) dazu eingerichtet ist, den Sollwert für diese Vorschaltgeräte (28, 34) so anzupassen, dass sich der gewünschte Druck in der Federspeicherbremse (12) einstellt.

5. Druckregelvorrichtung nach Anspruch 3 oder 4, bei der ein Vorschaltgerät (40) zur Steuerung des Schaltventils (36) vorgesehen ist und das Steuergerät (30) dazu eingerichtet ist, den Sollwert für dieses Vorschaltgerät (40) nach einer gewissen Anzugszeit, die das Ventil zum Schalten benötigt, abzusenken.

6. Druckregelvorrichtung nach einem der Ansprüche 3 - 5, bei der das Vorschaltgerät (40) des Schaltventils (36) und das Vorschaltgerät (28) des Zufuhrventils (26) durch eine gemeinsame Schnittstelle (X2) mit Energie versorgt werden und das Vorschaltgerät (34) des Ablassventils (32) durch eine separate Schnittstelle (X1) mit Energie versorgt wird.

7. Druckregelvorrichtung nach Anspruch 6, bei der der Öffnungsdruck des Druckbegrenzungsventils (38) mechanisch einstellbar ist.

8. Druckregelvorrichtung nach einem der vorstehenden Ansprüche, bei der das Zufuhrventil (26), das Ablassventil (32) und das Schaltventil (36) als leckagefreie Sitzventile ausgeführt sind.
